(19) **Europäisches Patentamt**
**European Patent Office**
**Office européen des brevets**

(11) **EP 4 319 335 A1**

(12) **EUROPEAN PATENT APPLICATION**
published in accordance with Art. 153(4) EPC

(43) Date of publication:
**07.02.2024 Bulletin 2024/06**

(21) Application number: **22780237.8**

(22) Date of filing: **18.03.2022**

(51) International Patent Classification (IPC):
**H04W 56/00** *(2009.01)*    **H04W 52/24** *(2009.01)*

(52) Cooperative Patent Classification (CPC):
**H04W 52/24; H04W 52/44; H04W 56/00**

(86) International application number:
**PCT/JP2022/012594**

(87) International publication number:
**WO 2022/210022 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021060869**

(71) Applicants:
• **DENSO CORPORATION**
  **Kariya-city, Aichi 448-8661 (JP)**

• **TOYOTA JIDOSHA KABUSHIKI KAISHA**
  **Toyota-shi**
  **Aichi 471-8571 (JP)**

(72) Inventor: **TAKAHASHI, Hideaki**
  **Kariya-city, Aichi 448-8661 (JP)**

(74) Representative: **TBK**
  **Bavariaring 4-6**
  **80336 München (DE)**

(54) **USER DEVICE AND COMMUNICATION CONTROL METHOD**

(57)    A user equipment (100) according to an aspect of the present disclosure performs communication with a base station (200) in a BWP that is a subset of a total bandwidth of a cell of the base station (200). The user equipment (100) comprises: a communicator (110) configured to perform the communication using an active BWP to be used for the communication with the base station (200) among a plurality of the BWPs configured in the user equipment (100); and a controller (120) configured to store a measurement result obtained by performing measurement on an SSB when a BWP with the SSB, which is a BWP in which the SSB is transmitted from the base station (200) among the plurality of BWPs, is the active BWP. The controller (120) is configured to control the communication using the stored measurement result when a BWP without the SSB, which is a BWP in which the SSB is not transmitted from the base station (200) among the plurality of BWPs, is the active BWP.

FIG. 4

Processed by Luminess, 75001 PARIS (FR)

**Description**

Cross-Reference to Related Applications

This application is based on and claims the benefit of priority of Japanese Patent Application No. 2021-060869, filed on March 31, 2021, the entire contents of which are incorporated herein by reference.

Technical Field

The present disclosure relates to a user equipment, and a communication control method used in a mobile communication system.

Background Art

In a fifth generation (5G) mobile communication system (5G system), communication between user equipment and a base station using a bandwidth part (BWP) that is a subset of a total bandwidth of a cell is defined. The user equipment performs communication by using a BWP (hereinafter, active BWP) used for communication with the base station. In the user equipment, a plurality of the BWPs can be configured for each of a downlink communication BWP (hereinafter, a downlink BWP) and an uplink communication BWP (hereinafter, an uplink BWP). The user equipment switches and uses the active BWP in a case where the plurality of BWPs is configured.

The base station transmits a synchronization signal and a physical broadcast channel block (hereinafter, SSB) that are used by the user equipment to measure radio quality. The user equipment performs measurement based on the SSB received from the base station. The user equipment uses a measurement result obtained by the measurement for communication control with the base station. For example, the user equipment calculates a pathloss estimate from the measurement result of a received power relative to the SSB. The user equipment can calculate an uplink transmission power used for uplink communication with the base station in an active uplink BWP corresponding to an active downlink BWP by using the calculated pathloss estimate.

In recent years, in 3GPP which is a mobile communication system standardization project, it has been studied to provide user equipment (so-called Reduced capability NR device) with limited communication capability in a 5G system. Since such the user equipment does not have multiple receivers, it is not possible to perform measurement on SSB transmitted at frequencies other than a BWP during communication in the BWP. For this reason, it is conceivable to configure a BWP in which the SSB is transmitted to the user equipment with limited communication capability. However, the BWP in which the SSB is transmitted is restricted, concentration of a large number of user equipment in such a restricted active BWP may cause traffic congestion.

In order to avoid traffic congestion, it is desirable to be able to configure a BWP in which no SSB is transmitted in the total bandwidth in the user equipment (See, for example, Non Patent Literature 1.). Even in user equipment in which a BWP in which an SSB is not transmitted is configured, it is possible to receive an SSB transmitted at a frequency other than the active BWP and perform measurement by using a measurement gap configured in the user equipment.

Citation List

Non Patent Literature

Non Patent Literature 1: 3GPP Contribution "R1-2100230"

Summary of Invention

However, when the user equipment switches the BWP in which the SSB is not transmitted (hereinafter, appropriately referred to as a BWP without the SSB) among the plurality of configured BWPs to the active BWP, since the SSB is not transmitted in the active downlink BWP after the switching, reception measurement for the SSB cannot be performed. Therefore, there is a problem in that it is difficult to perform communication control using a measurement result for the SSB.

Therefore, an object of the present disclosure is to provide user equipment and a communication control method capable of performing communication control using a measurement result for an SSB even when a BWP in which the SSB is not transmitted is configured.

A user equipment according to an aspect of the present disclosure performs communication with a base station in a BWP that is a subset of a total bandwidth of a cell of the base station. The user equipment comprises: a communicator configured to perform the communication using an active BWP to be used for the communication with the base station among a plurality of the BWPs configured in the user equipment; and a controller configured to store a measurement result obtained by performing measurement on an SSB when a BWP with the SSB, which is a BWP in which the SSB is transmitted from the base station among the plurality of BWPs, is the active BWP. The controller is configured to control the communication using the stored measurement result when a BWP without the SSB, which is a BWP in which the SSB is not transmitted from the base station among the plurality of BWPs, is the active BWP.

A communication control method according to an aspect of the present disclosure is executed by user equipment configured to perform communication with a base station in a BWP that is a subset of a total bandwidth of a cell of the base station. The communication control method comprises the steps of: performing the communication using an active BWP to be used for the communication with the base station among a plurality of the BWPs configured in the user equipment; storing a measurement result obtained by performing measurement on an SSB when a BWP with the SSB, which is a BWP in which the SSB is transmitted from the base station among the plurality of BWPs, is the active BWP; and controlling the communication using the stored measurement result when a BWP without the SSB, which is a BWP in which the SSB is not transmitted from the base station among the plurality of BWPs, is the active BWP.

Brief Description of Drawings

Fig. 1 is an explanatory diagram illustrating an example of a schematic configuration of a system according to an embodiment of the present disclosure.
Fig. 2 is a block diagram illustrating an example of a schematic functional configuration of user equipment according to an embodiment of the present disclosure.
Fig. 3 is a block diagram illustrating an example of a schematic functional configuration of a base station according to an embodiment of the present disclosure.
Fig. 4 is a flowchart for explaining an example of a schematic flow of processing (example 1) according to Operation Example 1 of an embodiment of the present disclosure.
Fig. 5 is a flowchart for explaining an example of a schematic flow of processing (example 2) according to Operation Example 1 of an embodiment of the present disclosure.

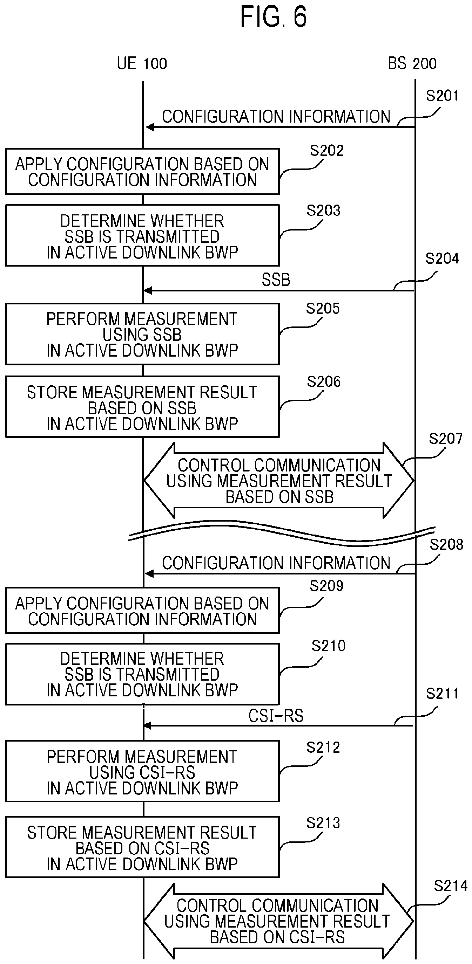

Fig. 6 is a flowchart for explaining an example of a schematic flow of processing according to Operation Example 2 of an embodiment of the present disclosure.

Description of Embodiments

Hereinafter, embodiments of the present disclosure will be described in detail with reference to the accompanying drawings. Note that, in the present specification and the drawings, elements that can be described in a similar manner are denoted by the same or similar reference numerals, and redundant description can be omitted.

(1) System Configuration

(1.1) System Overview

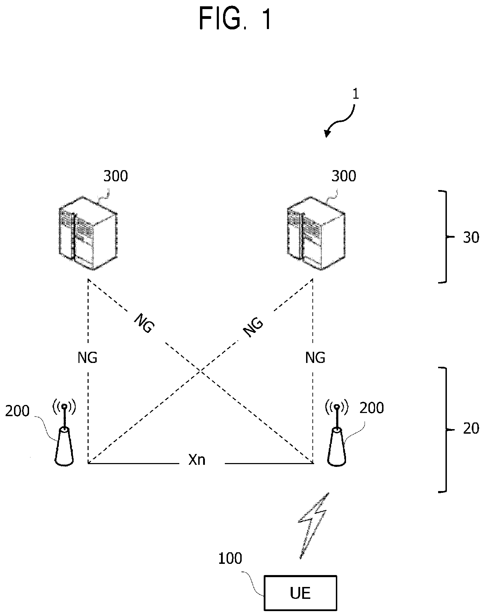

An example of a configuration of a system 1 according to an embodiment of the present disclosure will be described with reference to Fig. 1. The system 1 is, for example, a mobile communication system conforming to technical specifications (Technical specification (TS)) of 3GPP which is a mobile communication system standardization project. Hereinafter, as the system 1, a 5th generation system (5th Generation System (5GS)) of the 3GPP standard, that is, a mobile communication system based on NR (New Radio) will be described as an example. Note that the system 1 is not limited to this example. The system 1 may be a system conforming to a TS of LTE (Long Term Evolution) or another generation system (for example, the sixth generation) of the 3GPP standard. The system 1 may be a system conforming to TS of a standard other than the 3GPP standard.

As illustrated in Fig. 1, a system 1 includes a 5G radio access network (so-called Next Generation Radio Access Network (NG-RAN)) 20, a 5G core network (5G Core Network (5GC)) 30, and user equipment (User Equipment (UE)) 100.

The NG-RAN 20 includes a base station (Base Station (BS)) 200 that is a node of a radio access network. The BS 200 may communicate with a UE 100 located within a coverage area of the BS 200. The BS 200 communicates with the UE 100 using, for example, a protocol stack of the RAN. The protocol stack includes, for example, a RRC (Radio Resource Control) layer, a SDAP (Service Data Adaptation Protocol) layer, a PDCP (Packet Data Convergence Protocol) layer, a RLC (Radio Link Control) layer, a MAC (Medium Access Control) layer, and a physical (Physical (PHY)) layer. However, in the case of LTE, there may be no SDAP layer.

The BS 200 is, for example, a gNB that provides an NR user plane and control plane protocol terminations towards the UE 100 and is connected to the 5GC 30 via an NG interface. Note that the BS 200 may be, for example, an eNB that provides E-UTRA user plane and control plane protocol terminations toward the UE 100 in LTE.

The BS 200 may include a plurality of units. The plurality of units may include a first unit that hosts a higher layer (higher layer) included in the protocol stack and a second unit that hosts a lower layer (lower layer) included in the protocol stack. The higher layer may include an RRC layer, an SDAP layer, and a PDCP layer, and the lower layer may include an RLC layer, a MAC layer, and a PHY layer. The first unit may be a CU (central unit), and the second unit may be a DU (Distributed Unit). The plurality of units may include a third unit that performs processing below the PHY layer. The second unit may perform processing above the PHY layer. The third unit may be a RU (Radio Unit). The BS 200 may be one of the plurality of units and may be connected to another unit of the plurality of units. Furthermore, the BS 200 may be an IAB (Integrated Access and Backhaul) donor or an IAB node.

The 5GC 30 includes a core network apparatus 300. The core network apparatus 300 includes, for example, an AMF (Access and Mobility Management Function) and/or a UPF (User Plane Function). The AMF performs mobility management of the UE 100. The UPF provides a function specialized for U-plane processing. The AMF and the UPF are connected to the BS 200 via an NG interface.

The UE 100 may communicate with the BS 200 when located within the coverage area of the BS 200. The UE 100 may communicate with the BS 200 using the protocol stack described above.

The UE 100 is a communication apparatus that communicates via the base station 200. The UE 100 may be an apparatus used by a user. The UE 100 is, for example, a mobile radio communication apparatus such as a mobile phone terminal such as a smartphone, a tablet terminal, a notebook PC, a communication module, or a communication card. Furthermore, the UE 100 may be a vehicle (for example, a car, a train, or the like) or an apparatus provided in the vehicle. The UE 100 may be a transport body other than a vehicle (for example, a ship, an airplane, or the like) or an apparatus provided in the transport body other than a vehicle. Furthermore, the UE 100 may be a sensor or an apparatus provided in the sensor. Note that the UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The UE 100 may be user equipment (so-called reduced capability NR device (RedCap UE)) with limited communication capability. The RedCap UE may be, for example, a UE with reduced equipment cost and complexity as compared with UEs that meet Rel-15 or Rel-16 high performance, enhanced mobile broadband (enhanced Mobile Broadband (eMBB)) and ultra-reliable low latency (ultra-reliable and low latency communications (URLLC)). The RedCap UE may be capable of communicating at a communication speed higher than or equal to a communication speed defined by a LPWA (Low Power Wide Area) standard (for example, LTE Cat.1/1bis, LTECat.M1 (LTE-M), LTECat. NB1 (NB-IoT)). The RedCap UE may be communicable with a bandwidth greater than or equal to the bandwidth specified in the LPWA standard. The RedCap UE may have a restricted bandwidth used for communication as compared with the UE of Rel-15 or Rel-16. In FR1 (Frequency Range 1), for example, the maximum bandwidth of the RedCap UE may be 20 MHz, and may be 40 MHz under predetermined conditions. In FR2 (Frequency Range 2), for example, the maximum bandwidth of the RedCap UE may be 100 MHz. The RedCap UE may have only one receiver (so-called Rx chain) that receives a radio signal. The RedCap UE may be, for example, an industrial wireless sensor, a video surveillance apparatus, or a wearable apparatus.

(1.2) Configuration of User Equipment

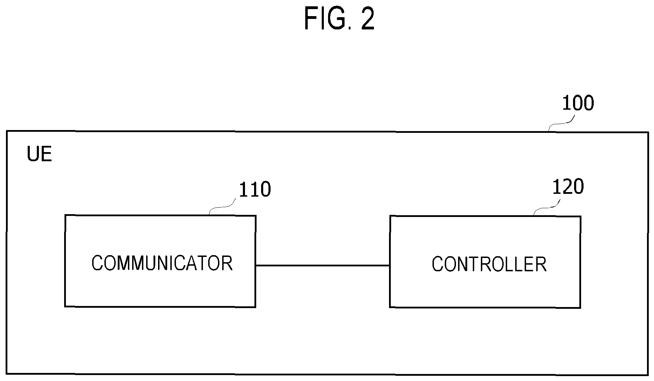

An example of a configuration of the UE 100 according to the embodiment of the present disclosure will be described with reference to Fig. 2. The UE 100 includes a communicator 110 and a controller 120.

The communicator 110 communicates with other communication apparatuses by transmitting and receiving signals. For example, the communicator 110 receives a radio signal from the BS 200 and transmits a radio signal to the BS 200. Furthermore, for example, the communicator 110 may receive a radio signal from another UE and transmit a radio signal to another UE.

The communicator 110 may include one or more receivers that receive radio signals and one or more transmitters that transmit radio signals. Hereinafter, a configuration in which the communicator 110 includes only one receiver is mainly assumed. The receiver and the transmitter may include an antenna and an RF circuit. The antenna converts a signal into a radio wave and emits the radio wave into space. Furthermore, the antenna receives a radio wave in space and converts the radio wave into a signal. The antenna may include a transmitting antenna and a receiving antenna. The antenna may include an antenna for transmission and reception. The antenna may include a plurality of antenna elements. The RF circuit performs analog processing of a signal transmitted and received via the antenna. The RF circuit may include a high frequency filter, an amplifier, a modulator, a low pass filter, and the like.

The controller 120 performs various controls in the UE 100. The controller 120 controls, for example, communication with the BS 200 or another UE 100 via the communicator 110. An operation of the UE 100 to be described later may be an operation under the control of the controller 120.

The controller 120 may include one or more processors capable of executing a program, and a memory that stores the program. The one or more processors may execute the program to perform the operation of the controller 120. The program may be a program for causing the processor to execute the operation of the controller 120.

The processor performs digital processing of signals transmitted and received via the antenna and the RF circuit. The digital processing includes processing of a protocol stack of the RAN. The processor may be a single processor. The processor may include a plurality of processors. The plurality of processors may include a baseband processor that performs digital processing and one or more processors that perform other processing. The memory stores a program executed by the processor, a parameter related to the program, and data related to the program. The memory may include at least one of a ROM (Read Only Memory), an EPROM (Erasable Programmable Read Only Memory), an EEPROM (Electrically Erasable Programmable Read Only Memory), a RAM (Random Access Memory), and a flash memory. All or a part of the memory may be included in the processor.

Note that, in the following, an operation of a functional unit (specifically, the communicator 110 and the controller 120) included in the UE 100 may be described as an operation of the UE 100.

(1.3) Configuration of Base Station

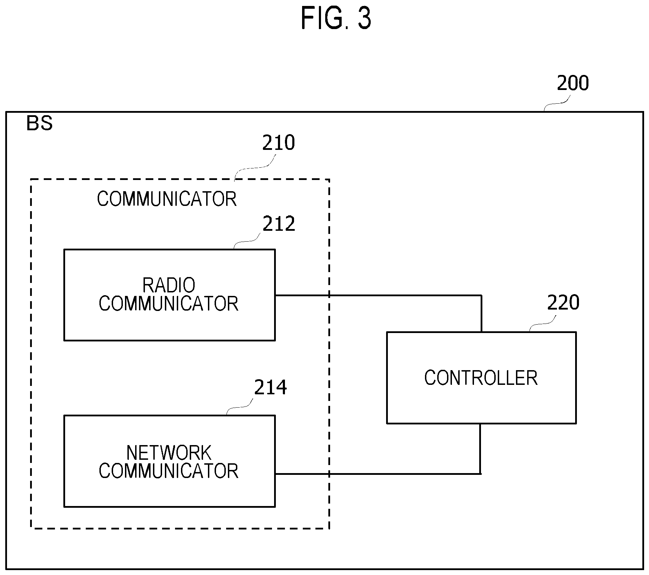

An example of a configuration of the BS 200 according to the embodiment of the present disclosure will be described with reference to Fig. 3. The BS 200 includes a communicator 210 and a controller 220.

The communicator 210 communicates with other communication apparatuses by transmitting and receiving signals. The communicator 210 includes a radio communicator 212 and a network communicator 214.

The radio communicator 212 transmits and receives signals from the radio communication apparatus. For example, the radio communicator 212 receives a radio signal from the UE 100 and transmits a radio signal to the UE 100. The radio communicator 212 may include one or more receivers that receive radio signals and one or more transmitters that transmit radio signals. The receiver and the transmitter may include an antenna and an RF circuit. The antenna converts a signal into a radio wave and emits the radio wave into space. Furthermore, the antenna receives a radio wave in space and converts the radio wave into a signal. The antenna may include a transmitting antenna and a receiving antenna. The antenna may include an antenna for transmission and reception. The antenna may be a directional antenna. The antenna may include a plurality of antenna elements. The RF circuit performs analog processing of a signal transmitted and received via the antenna. The RF circuit may include a high frequency filter, an amplifier, a modulator, a low pass filter, and the like.

The network communicator 214 transmits and receives signals from a network. The network communicator 214 receives a signal from an adjacent base station connected via an Xn interface which is an inter-base station interface, for example, and transmits the signal to the adjacent base station. Furthermore, the network communicator 214 receives a signal from the core network apparatus 300 connected via the NG interface, for example, and transmits the signal to the core network apparatus 300. The network communicator 214 may include a network interface. The network interface is, for example, a network adapter.

The controller 220 performs various types of control in the BS 200. The controller 220 controls, for example, communication with the UE 100 via the radio communicator 212. Furthermore, the controller 220 controls communication with a node (for example, a network node in a core network, an adjacent base station, or a core network apparatus 300.) via the network communicator 214, for example. An operation of the BS 200 to be described later may be an operation under the control of the controller 220.

The controller 220 may include one or more processors capable of executing a program, and a memory that stores the program. The one or more processors may execute the program to perform the operation of the controller 220. The program may be a program for causing the processor to execute the operation of the controller 220.

The processor performs digital processing of signals transmitted and received via the antenna and the RF circuit. The digital processing includes processing of a protocol stack of the RAN. The processor may be a single processor. The processor may include a plurality of processors. The plurality of processors may include a baseband processor that performs digital processing and one or more processors that perform other processing. The memory stores a program executed by the processor, a parameter related to the program, and data related to the program. The memory may include at least one of a ROM, an EPROM, an EEPROM, a RAM, and a flash memory. All or a part of the memory may be included in the processor.

A part or all of the controller 220 may be virtualized. That is, a part or all of the controller 220 may be implemented as a virtual machine. In this case, a part or all of the controller 220 may operate a physical machine (that is, hardware) including a processor, a memory, and the like and as a virtual machine on a hypervisor.

Note that, hereinafter, the operation of the functional units (the communicator 210 and the controller 220) included in the BS 200 may be described as the operation of the BS 200.

(1.4) BWP (Bandwidth Part)

The UE 100 and the BS 200 perform communication using a BWP (bandwidth part) which is a subset of the total bandwidth of the cell. Specifically, the BS 200 configures one or more BWPs for the UE 100. The BS 200 can broadcast the UE 100 of the BWP (that is, the active BWP) used for communication with the BS 200 among the configured one or more BWPs. Specifically, the BS 200 can transmit, to the UE 100, an identifier indicating a BWP to be activated at the time of performing the configuration, that is, a BWP to be first used in communication with the BS 200. Furthermore, for control of switching from the active BWP to a BWP that is not the active BWP (hereinafter, inactive BWPs) and switching from the inactive BWP to the active BWP (so-called BWP switching), for example, a physical downlink control channel (for example, downlink assignment, uplink assignment), a timer (that is, bwp-InactivityTimer), RRC signaling, a MAC entity, or the like is used.

The BWP includes an initial BWP and a dedicated BWP. The initial BWP is used at least for initial access of the UE 100. The initial BWP is commonly used by a plurality of UEs 100. The initial BWP includes an initial BWP for downlink communication (hereinafter, initial downlink BWP (Initial Downlink BWP)) and an initial BWP for uplink communication (hereinafter, an initial uplink BWP (Initial Uplink BWP)). A value of the identifier (that is, bwp-id) indicating each of the initial downlink BWP and the initial uplink BWP is 0.

The UE 100 can determine the initial BWP (that is, the initial downlink BWP and the initial uplink BWP) by two methods, for example. In the first method, the UE 100 determines the initial BWP based on CORESET #0 configured using information included in a master information block (MIB) in a physical broadcast channel (PBCH). In the second method, the UE 100 determines the initial BWP based on a frequency domain location and bandwidth configured using information included in a system information block (SIB). For example, the UE 100 may apply the BWP determined by the first method to the communication with the BS 200 until the reception of a message 4 in the random access procedure. For example, after receiving the message 4 (Msg. 4), the UE 100 may apply the BWP determined by the second method to the communication with the BS 200.

The dedicated BWP is dedicatedly configured for the UE 100. The dedicated BWP includes a dedicated BWP for downlink communication (hereinafter, a dedicated downlink BWP (UE dedicated downlink BWP)) and a dedicated BWP for uplink communication (hereinafter, a dedicated uplink BWP (UE dedicated uplink BWP)). A value of the identifier indicating each of the dedicated downlink BWP and the dedicated uplink BWP is other than 0.

In the UE 100, for example, a dedicated BWP is configured on the basis of information (for example, information for the downlink BWP (that is, BWP-Downlink) and information for the uplink BWP (that is, BWP-Uplink).) included in the RRC message. Each of the information for the downlink BWP and the information for the dedicated uplink BWP may include, for example, at least one of information (for example, locationAndBadwidth) indicating a frequency domain location and bandwidth, information (for example, subcarrierSpacing) indicating a subcarrier spacing, and information (for example, cyclicPrefix) indicating whether an extended cyclic prefix is used.

(1.5) Synchronization Signal and Physical Broadcast Channel Block (SSB)

The SSB includes four OFDM symbols in the time domain and 240 consecutive subcarriers in the frequency domain. The SSB includes a primary synchronization signal (hereinafter, a PSS), a secondary synchronization signal (hereinafter, an SSS), and a physical broadcast channel (PBCH). Each of the PSS and the SSS occupies one OFDM symbol and 127 subcarriers. The PBCH spans three OFDM symbols and 240 subcarriers. The location of the resource element to which the SSB is mapped is specified in the specification.

The BS 200 transmits the SSB in an initial BWP (specifically, an initial downlink BWP). The BS 200 can periodically transmit the SSB. The UE 100 can receive (that is, detects) the SSB transmitted from the BS 200 in the initial downlink BWP, and synchronize the time and/or the frequency.

(1.6) Measurement

The UE 100 can perform measurement based on a radio signal received from the BS 200. For example, the UE 100 measures radio quality (for example, received power (so-called SS reference signal received power: SS-RSRP), received quality (so-called SS reference signal received quality: SS-RSRQ), a signal-to-interference-plus-noise ratio (so-called SS signal-to-noise and interference ratio: SS-SINR), and the like) based on the SSB. Furthermore, the UE 100 may measure the radio quality (for example, received power (so-called CSI reference signal received quality: CSI-RSRP), received quality (so-called CSI reference signal received quality: CSI-RSRQ), a signal-to-interference-plus-noise ratio (so-called CSI signal-to-noise and interference ratio: CSI-SINR), and the like) based on, for example, a channel state information reference signal (hereinafter, CSI-RS). The CSI-RS is transmitted by a resource (hereinafter, CSI-RS resource) dedicatedly configured in the UE 100. The CSI-RS resource can be configured to both the initial BWP and the dedicated BWP.

The UE 100 may use a measurement result for communication control with the BS 200. Furthermore, the UE 100 may report the measurement result to the BS 200. When performing the measurement based on the SSB, the UE 100 may report, for example, a measurement result for each SSB, a measurement result for each cell based on the SSB, and/or the SSB index. Furthermore, when performing the measurement based on the CSI-RS, the UE 100 may report, for example, a measurement result for each CSI-RS resource, a measurement result for each cell based on the CSI-RS resource, and/or a CSI-RS resource identifier. The UE 100 may report the measurement result periodically or by using a predetermined event as a trigger. The UE 100 may report the measurement result in a physical uplink shared channel (PUSCH) in the uplink BWP, for example.

Note that, when receiving request information of a measurement gap from the UE 100 regarding the measurement (SSB based intra-frequency measurement) based on the SSB at a frequency included in a frequency range of a cell, the BS 200 may configure the measurement gap according to the request information. In a case where the BS 200 has not received the request information from the UE 100 and none of the plurality of BWPs configured for the UE 100 includes the frequency domain resource of the SSB associated with the initial BWP other than the initial BWP, the BS 200 may always provide the configuration of the measurement gap to the UE 100.

(1.7) Uplink power control

A UE 100 can use a measurement result for uplink power control, for example, as communication control with a BS 200. For example, the UE 100 calculates the uplink power control of PUSCH by a power equation using a path loss estimation value calculated based on the measurement result. Specifically, when the UE 100 transmits the PUSCH on an active uplink BWPb of a carrier f of a serving cell c by using a PUSCH power control adjustment state with an index l and a parameter set configuration with an index j, the UE calculates an uplink transmission power $P_{PUSCHb, f, c}$ (i, j.$q_d$, l) [dBM] of the PUSCH in a PUSCH transmission occasion i by using, for example, Equation 1 (Math. 1) and Equation 2 (Math. 2) described below.

(Math. 1)

$$P_{\text{PUSCH}b,f,c}(i,j,q_d,l) = \min\left\{\begin{array}{l} P_{\text{CMAX},f,c}(i), \\ P_{\text{0\_PUSCH}b,f,c}(j) + 10\log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array}\right\}$$

... (Equation 1)

(Math. 2)

$$PL_{b, f, c}(q_d) = (\text{referenceSignalPower}) - (\text{higher layer filtered RSRP})$$

... (Equation 2)

The "$PL_{b, f, c}(q_d)$" are path loss estimation values calculated by the UE 100. The "referenceSignalPower" is a transmission power value of a reference signal such as an SSB or a CSI-RS. The "higher layer filtered RSRP" is a received power value of a reference signal such as an SSB or a CSI-RS. Details of each parameter in Equations 1 and 2 are defined in TS of the 3GPP standard.

The UE 100 calculates a path loss estimation value based on Equation 2 using the transmission power value of the reference signal and the received power value of the reference signal. The UE 100 can calculate the uplink transmission power used for transmission of the PUSCH based on Equation 1 using the calculated path loss estimation value. Note that, similarly to the PUSCH, the UE 100 can calculate, for example, the uplink transmission power used for transmission of the PUCCH, a sounding reference signal (SRS), and the like by a power equation using a path loss estimation value.

(2) System operation

(2.1) Operation example 1

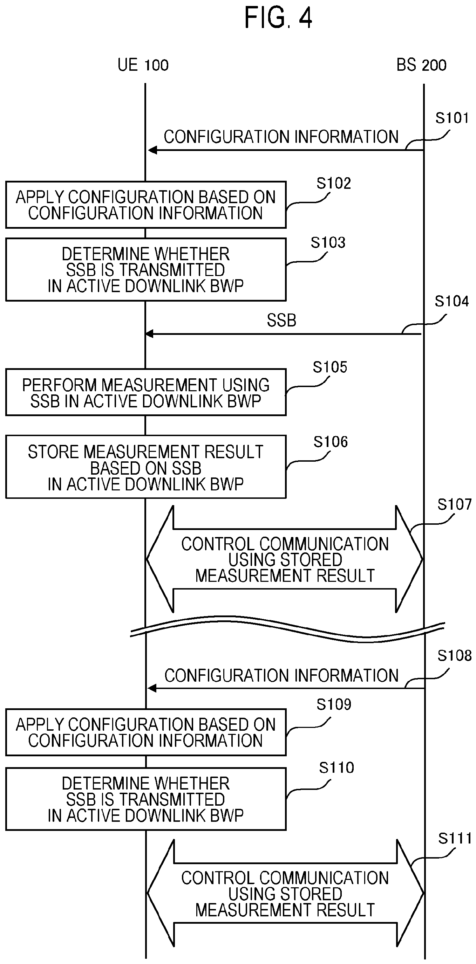

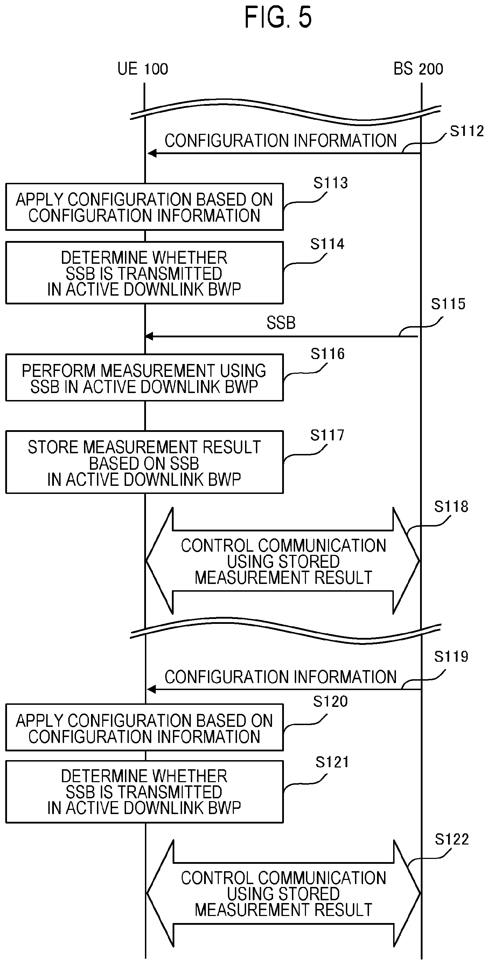

Operation example 1 of the UE 100 and the BS 200 according to the embodiment of the present disclosure will be described with reference to Fig. 4 and Fig. 5. The UE 100 is located in a serving cell managed by the BS 200. The UE 100 performs communication with the BS 200 by the serving cell.

In step S101, the BS 200 transmits configuration information in order to configure a BWP to the UE 100. The UE 100 receives the configuration information from the BS 200. The BS 200 may transmit the configuration information to the UE 100 using an MIB and/or an SIB (for example, SIB1). The BS 200 may transmit the configuration information to the UE 100 by using dedicated RRC signaling (for example, RRCSetup, RRCResume, RRCReestablishment, and the like.).

The configuration information may include information for configuring an initial BWP or information for configuring a dedicated BWP. The BS 200 may transmit the configuration information for configuring the initial BWP using the MIB and/or the SIB. The BS 200 may transmit the configuration information for configuring the dedicated BWP by using the dedicated RRC signaling.

The configuration information may include, for example, at least one of information indicating a frequency domain location and bandwidth (for example, locationAndBadwidth), information indicating a subcarrier spacing (for example, subcarrierSpacing), information indicating whether an extended cyclic prefix is used (for example, cyclicPrefix), information indicating a parameter commonly applied to communication in the initial downlink BWP, and information indicating a parameter commonly applied to communication in the initial uplink BWP. In addition, the configuration information may include information for configuring a dedicated BWP (that is, the dedicated downlink BWP and/or the dedicated uplink BWP). The information for configuring the dedicated BWP may include at least one of information for identifying the BWP (for example, bwp-id), information indicating a parameter commonly applied to communication in the dedicated downlink BWP, information indicating a parameter dedicatedly applied to communication in the dedicated downlink BWP, information indicating a parameter commonly applied to communication in the dedicated uplink BWP, and information indicating a parameter dedicatedly applied to communication in the dedicated uplink BWP.

The configuration information may include configuration information for measuring the SSB. The configuration information may include, for example, information indicating a frequency in which the SSB is transmitted (for example, an absolute radio frequency channel number (ARFCN) or the like) as the information indicating a measurement object.

The configuration information may include information indicating a transmission power value of the SSB (for example, ss-PBCH-BlockPower). The transmission power value of the SSB is, for example, an average EPFR (Energy per Resource Element) of resource elements that carry an SSS in a unit of dBm that the network used for SSB transmission. For example, the BS 200 may transmit the information indicating the transmission power value of the SSB by the SIB1 in step S101 or at a timing different from step S101.

Note that, in a case where the frequency domain resource of the SSB associated with the initial BWP is not included in any of the plurality of BWPs dedicatedly configured for the UE 100 other than the initial BWP, the BS 200 may determine whether or not the UE 100 supports communication in the BWP in which the SSB is not transmitted. For example, the BS 200 can determine whether or not the UE 100 supports communication in the BWP in which the SSB is not transmitted on the basis of capability information received from the UE 100. For example, in a case where the capability information received from the UE 100 includes information indicating support of a BWP operation without bandwidth restriction (for example, bwp-WithoutRestriction), the BS 200 may determine that the UE 100 supports communication in the BWP in which the SSB is not transmitted. In this case, the BS 200 may configure the BWP in which the SSB is not transmitted to the UE 100. Note that the bandwidth restriction means, for example, that the SSB may not be transmitted in the bandwidth of the downlink BWP dedicatedly configured for the UE 100.

When determining that the UE 100 does not support communication in the BWP in which the SSB is not transmitted, the BS 200 may always provide the configuration of the measurement gap to the UE 100. On the other hand, when determining that the UE 100 supports communication in the BWP in which the SSB is not transmitted, the BS 200 may omit the configuration of the measurement gap for the UE 100.

Note that, in a case where the downlink BWP dedicatedly configured for the UE 100 includes the dedicated downlink BWP in which the SSB is not transmitted, the BS 200 may configure, in the UE 100, measurement using the CSI-RS resource included in the dedicated downlink BWP in which the SSB is not transmitted. The BS 200 may transmit the configuration information of the measurement to the UE 100 together with the BWP-related information. The BS 200 may transmit the measurement configuration information to the UE 100 separately from the BWP-related information.

In step S 102, the UE 100 applies the configuration based on the configuration information received in step S101 in order to communicate with the BS 200 in the BWP. The UE 100 can determine, based on the configuration information, the BWP to be used as an active BWP among the configured one or more BWPs. For example, when the UE 100 performs communication with the BS 200 by using time division duplex (Time Division Duplex (TDD)), the center frequency of the active downlink BWP and the center frequency of the active uplink BWP may coincide with each other. When the UE 100 performs communication with the BS 200 by using frequency division duplex (Frequency Division Duplex (FDD)), the center frequency of the active downlink BWP and the center frequency of the active uplink BWP may coincide with each other or may be different from each other. The bandwidth of the active downlink BWP and the bandwidth of the active uplink BWP may coincide with each other or may be different from each other. When the active uplink BWP and the active downlink BWP have the same center frequency, the active uplink BWP and the active downlink BWP correspond to each other.

In step S103, the UE 100 determines whether or not the SSB is transmitted in the active BWP, specifically, the downlink BWP (hereinafter, the active downlink BWP) configured as the active BWP. That is, the UE 100 determines whether or not the active downlink BWP includes the SSB of the serving cell. When determining that the SSB is transmitted in the active downlink BWP, the UE 100 executes processing of step S105. On the other hand, when determining that the SSB is not transmitted in the active downlink BWP, the UE 100 may omit the measurement using the SSB.

For example, in a case where the active downlink BWP is the initial BWP, the UE 100 determines that the SSB is transmitted in the active downlink BWP. Furthermore, for example, in a case where the frequency at which the SSB is transmitted is included in the active downlink BWP, the UE 100 may determine that the SSB is transmitted in the active downlink BWP based on the information indicating the frequency at which the SSB is transmitted. On the other hand, in a case where the frequency at which the SSB is transmitted is not included in the active downlink BWP, the UE 100 determines that the SSB is not transmitted in the active downlink BWP.

For example, in a case where the UE 100 is a RedCap UE having the capability of supporting the BWP operation without bandwidth restriction, the UE 100 may determine whether the SSB is transmitted in the active downlink BWP. In a case where the UE 100 is a RedCap UE that does not have the capability of supporting the BWP operation without bandwidth restriction, or in a case where the UE 100 is a UE other than the RedCap UE, the UE 100 may perform the measurement according to the measurement configuration from the BS 200 without determining whether the SSB is transmitted in the active downlink BWP.

In a case where it is determined that the SSB is transmitted in the active downlink BWP, that is, in a case where the active downlink BWP includes the SSB of the serving cell, the UE 100 configures the measurement of the SSB to enable and performs the measurement of the serving cell. On the other hand, in a case where it is determined that the SSB is not transmitted in the active downlink BWP, that is, in a case where the active downlink BWP does not include the SSB of the serving cell, the UE 100 configures the measurement of the SSB to disable and omits the measurement. That is, the UE 100 does not measure the serving cell. Furthermore, in a case where the UE 100 is a RedCap UE having the capability of supporting the BWP operation without bandwidth restriction, and the active downlink BWP does not include the SSB of the serving cell, the UE 100 does not need to perform the measurement of the serving cell.

In the present operation example, the description will proceed on the assumption that the UE 100 determines that the SSB is transmitted in the active downlink BWP used for communication with BS 200 among the plurality of BWPs set in UE 100. That is, the active downlink BWP is a BWP in which the SSB is transmitted from the BS 200 (hereinafter, appropriately referred to as a BWP with SSB).

In step S104, the BS 200 transmits the SSB in the serving cell. Specifically, the BS 200 transmits the SSB to the UE 100 in the configured active downlink BWP.

In step S105, the UE 100 performs measurement using the SSB in the active downlink BWP. The UE 100 measures the radio quality using, for example, the SSB. The radio quality is, for example, the received power of the SSB, the received quality of the SSB, the signal-to-interference-plus-noise ratio of the SSB, or the like. When the UE 100 is not the RedCap UE having the capability of supporting the BWP operation without bandwidth restriction, the UE may perform measurement for the serving cell according to the measurement configuration from the BS 200.

In step S106, when the BWP with SSB is the active BWP, the UE 100 stores the measurement result obtained by performing measurement relative to the SSB. The UE 100 stores, for example, the received power value of the SSB obtained by the measurement.

In step S107, the UE 100 controls communication with the BS 200 in the active downlink BWP by using the stored measurement result. For example, the UE 100 calculates the uplink transmission power on the active uplink BWP using the path loss estimation value calculated from the measurement result of the received power for the SSB. Specifically, the UE 100 calculates the uplink transmission power of the PUSCH using, for example, Equations 1 and 2 described above. First, the UE 100 can calculate the path loss estimation value from Equation 2 using the transmission power value of the SSB and the received power value of the SSB. Secondly, the UE 100 can calculate the uplink transmission power from Equation 1 using the calculated path loss estimation value.

Note that the UE 100 may similarly calculate the uplink transmission power of a channel or a signal used for other uplink communication. For example, similarly to the PUSCH, the UE 100 may calculate the uplink transmission power used for transmission of the PUCCH or the SRS used for the uplink communication.

Note that the UE 100 may store the path loss estimation value calculated based on the received power of the SSB as the measurement result. The UE 100 may store the calculated uplink transmission power.

The UE 100 performs the uplink communication with the BS 200 in the active uplink BWP with the uplink transmission power calculated. The UE 100 transmits, for example, at least one of the PUCCH, the PUSCH, and the SRS to the BS 200 with the calculated uplink transmission power. The BS 200 receives at least one of the PUCCH, the PUSCH, and the SRS from the UE 100. Note that the active uplink BWP corresponds to the active downlink BWP in which the SSB used for measurement is transmitted.

It is noted that the UE 100 and the BS 200 may perform communication using the active downlink BWP in addition to the active uplink BWP. The BS 200 may periodically transmit the SSB in the active downlink BWP. The UE 100 may perform the measurement based on the SSB each time the SSB is received from the BS 200. The UE 100 may update the stored measurement result with a new measurement result obtained by the measurement. The UE 100 may calculate the uplink transmission power each time the measurement result is updated.

In step S108, the BS 200 transmits configuration information in order to configure the BWP for the UE 100. The BS 200 may transmit the configuration information to the UE 100 using the dedicated RRC signaling in the active downlink BWP. The UE 100 receives the configuration information from the BS 200. The configuration information may include information similar to that in step S101.

The configuration information may include control information for switching the active BWP. The control information may be, for example, information specifying the active BWP. In the present operation example, the control information is information for switching the active BWP from the BWP with SSB to the BWP in which the SSB is transmitted from the BS 200 (hereinafter, appropriately referred to as a BWP without SSB).

In step S109, the UE 100 applies the configuration based on the configuration information received in step S108. The UE 100 may switch the active BWP from the BWP with SSB to the BWP without SSB according to the application of the configuration based on the control information from the BS 200. For example, in accordance with the control information, the UE 100 changes the BWP used for communication until immediately before the configuration is applied from the active BWP to an inactive BWP, and changes the BWP designated as the active BWP from the inactive BWP to the active BWP. When performing communication with the BS 200 by using the TDD, the UE 100 switches the BWP so that the center frequency of the active downlink BWP and the center frequency of the active uplink BWP coincide with each other. In addition, when performing communication with the BS 200 using the FDD, the UE 100 may or may not allow the center frequency of the active downlink BWP and the center frequency of the active uplink BWP to coincide with each other by switching of the BWP.

Step S110 corresponds to step S103. In the present operation example, the UE 100 determines that the SSB is not transmitted in the active downlink BWP. Therefore, in the following description, the active downlink BWP is a BWP without SSB.

In step S111, the UE 100 controls communication with the BS 200 in the active downlink BWP by using the stored measurement result. Since no SSB is transmitted in the current active downlink BWP, the UE 100 does not perform measurement by using the SSB in the current active downlink BWP. Therefore, the UE 100 controls communication with the BS 200 in the active downlink BWP by using the measurement result stored before switching the active BWP from the BWP with SSB to the BWP without SSB.

For example, the UE 100 may control the uplink transmission power on the active uplink BWP by using the stored measurement result. Specifically, the UE 100 may calculate the path loss estimation value using the received power value of the SSB included in the measurement result stored in step S106. When storing the measurement result obtained by the measurement using the SSB in step 107, the UE 100 may calculate the path loss estimation value using the measurement result. That is, the UE 100 may calculate the path loss estimation value using the latest measurement result. The UE 100 can calculate the uplink transmission power using the calculated path loss estimation value. When the UE 100 stores the path loss estimation value as the measurement result, the UE may calculate the uplink transmission power using the stored path loss estimation value. Similarly to step S107, the UE 100 may similarly calculate the uplink transmission power of the other channels or signals used for the uplink communication.

The UE 100 performs uplink communication with the BS 200 in the active uplink BWP using the calculated uplink transmission power. In addition, the UE 100 and the BS 200 may perform communication using the active downlink BWP in addition to the active uplink BWP. The UE 100 may perform communication in the active downlink BWP in addition to the active uplink BWP by using the measurement result stored in step S106.

When (periodic) reception of the CSI-RS transmitted in the active downlink BWP in which the SSB is not transmitted is not configured in the UE 100, the UE 100 may control communication with the BS 200 in the active downlink BWP by using the measurement result obtained by measurement while the BWP with SSB is the active BWP, that is, the measurement result stored in step S106. When (periodic) reception of the CSI-RS transmitted in the active downlink BWP in which the SSB is not transmitted is configured in the UE 100, the UE 100 may execute an operation example 2 to be described later.

Thereafter, as illustrated in Fig. 5, in step S112, the BS 200 transmits configuration information for configuring the BWP to the UE 100. Step S112 corresponds to step S108.

Steps S113 and S114 correspond to steps S109 and S110, respectively. In the present operation example, the configuration information includes control information for switching the active BWP from the BWP without SSB to the BWP with SSB. Therefore, in step S114, the UE 100 determines that the SSB is transmitted in the active downlink BWP. The UE 100 may execute the processing of step S116 in response to the switching of the active BWP from the BWP without SSB to the BWP with SSB.

Steps S114 to S116 correspond to steps S104 to S106. In the present operation example, in step S114, the UE 100 determines that the SSB is transmitted in the active downlink BWP. Therefore, in the following description, the active downlink BWP is the BWP with SSB.

In step S117, the UE 100 stores the measurement result obtained by performing the measurement on the SSB. For example, the UE 100 may update the stored measurement result with a new measurement result obtained by the measurement in step S116. Therefore, for example, the UE 100 may overwrite the measurement result stored in step S106 (or S107) with the measurement result measured in step S116.

The UE 100 may update the stored measurement result with a new measurement result obtained each time measurement is performed. Therefore, the UE 100 may store only the latest measurement result and delete the past measurement result regardless of the BWP in which the SSB is transmitted. Alternatively, for example, the UE 100 may overwrite the measurement result obtained by measuring in the same BWP as the current active downlink BWP with the measurement result measured in step S116. The UE 100 may continue to store a measurement result obtained by performing measurement in a BWP different from the current active downlink BWP. Therefore, when there are a plurality of BWPs with SSB in a plurality of configured BWPs, the UE 100 may store the latest measurement result for each BWP.

Step S118 corresponds to step S107. The UE 100 controls communication with the BS 200 in the active downlink BWP by using the measurement result stored in step S117.

Steps S119 to S121 correspond to steps S108 to S111. In the present operation example, in step S121, the UE 100 determines that no SSB is transmitted in the active downlink BWP. Therefore, in the following description, the active downlink BWP is a BWP without an SSB.

Step S122 corresponds to step S111. The UE 100 controls communication with the BS 200 in the active downlink BWP by using the stored measurement result. The UE 100 may control communication with the BS 200 in the active BWP by using the latest measurement result obtained by the measurement in step S116 or S118. When storing the latest measurement result for each BWP, the UE 100 may control communication with the BS 200 in the active BWP by using the measurement result obtained in the BWP having a frequency closest to the frequency of the current active BWP.

As described above, the UE 100 (the communicator 110) performs communication using the active BWP used for communication with the BS 200 among the plurality of BWPs configured in the UE 100. The UE 100 (the controller 120) stores the measurement result obtained by performing measurement on the SSB when the BWP with SSB is the active BWP. The UE 100 (the controller 120) controls communication with the BS 200 using the stored measurement result when the BWP without SSB is the active BWP. As a result, since the UE 100 controls communication using the stored measurement result, communication control using the measurement result for the SSB is possible even if the BWP in which the SSB is not transmitted is configured.

In addition, the UE 100 (the controller 120) may perform measurement on the SSB in the BWP with SSB in response to the switching of the active BWP from the BWP without SSB to the BWP with SSB. The UE 100 (the controller 120) may update the stored measurement result with the measurement result. Accordingly, when the BWP without SSB is the active BWP, the UE 100 can use the latest measurement result, which is the measurement result closest to the current situation of the UE 100 among the past measurement results, for communication control.

In addition, when the BWP without SSB is the active BWP, the UE 100 (the controller 120) may control the uplink transmission power on the active uplink BWP by using the stored measurement result. In addition, the stored measurement result may include at least one of the received power of the SSB and the path loss estimation value calculated from the received power. As a result, the UE 100 can appropriately control the uplink transmission power as compared with a case in which the measurement result stored when the BWP with SSB is the active BWP is not used.

Furthermore, in a case where a plurality of BWPs with SSB exist in a plurality of BWPs, the UE 100 (the controller 120) may use the latest measurement result obtained in the BWP with SSB corresponding to the active BWP among the measurement results of the plurality of BWPs with SSB. As a result, the UE 100 performs communication control using the measurement result of the frequency closest to the frequency of the current active BWP, so that the communication control can be appropriately performed.

(2.2) Operation example 2

Operation example 2 of the UE 100 and the BS 200 according to the embodiment of the present disclosure will be described. The differences from the above descriptions will be mainly described. In the operation example 2, an example of an operation in which the UE 100 performs communication control using the measurement result of the CSI-RS will be described.

Steps S201 to S210 correspond to steps S101 to S110. The configuration information in step S201 and S208 may include configuration information for configuring measurement using the CSI-RS. Alternatively, the BS 200 may transmit configuration information for configuring measurement using the CSI-RS to the UE 100 separately from the configuration information in step S201 and S208. The UE 100 applies the configuration of measurement using the CSI-RS based on the configuration information.

The configuration information for configuring measurement using the CSI-RS may include information for determining the transmission power value of the CSI-RS (for example, powerControlOffsetSS). The information for determining the transmission power value of the CSI-RS may be, for example, an offset value for calculating the transmission power value of the CSI-RS from the transmission power value of the SSB. The UE 100 can determine a value offset from the transmission power value of the SSB by the offset value as the transmission power value of the CSI-RS. For example, when the initial BWP is the active BWP, the UE 100 may measure the received power of the SSB to be transmitted in the active BWP and may store the measured received power.

In step S207, the UE 100 controls communication with the BS 200 in the active downlink BWP by using a measurement result based on the SSB. The measurement result based on the SSB is the measurement result stored in step S206.

In step S210, in the present operation example, the UE 100 determines that no SSB is transmitted in the active downlink BWP. Therefore, in the following description, the active downlink BWP is a BWP without an SSB.

In step S211, the BS 200 transmits the CSI-RS for the UE 100 using the CSI-RS resource configured to the UE 100. Note that the CSI-RS resource is included in the active downlink BWP configured to the UE 100.

In step S212, the UE 100 performs measurement using the SSB in the active downlink BWP. The UE 100 performs measurement of the radio quality using the CSI-RS. The radio quality is, for example, received power of the CSI-RS, received quality of the CSI-RS, and the like.

In step S213, the UE 100 stores the measurement result based on the CSI-RS. The UE 100 stores, for example, the received power value of the CSI-RS obtained by the measurement.

In step S214, the UE 100 controls communication with the BS 200 in the active downlink BWP by using the measurement result based on the CSI-RS. For example, the UE 100 performs the uplink power control of calculating the uplink transmission power on the active uplink BWP using the path loss estimation value calculated from the measurement result of the received power for the SI-RS. Specifically, the UE 100 calculates the uplink transmission power of the PUSCH using, for example, Equations 1 and 2 described above. More specifically, firstly, the UE 100 can calculate the path loss estimation value from Equation 2 by using the transmission power value of the CSI-RS and the received power value of the CSI-RS. Secondly, the UE 100 can calculate the uplink transmission power from Equation 1 using the calculated path loss estimation value.

Note that the UE 100 may similarly calculate the uplink transmission power of a channel or a signal used for other uplink communication. For example, similarly to the PUSCH, the UE 100 may calculate the uplink transmission power used for transmission of the PUCCH or the SRS used for the uplink communication.

The UE 100 performs the uplink communication with the BS 200 in the active uplink BWP with the uplink transmission power calculated. The UE 100 transmits, for example, at least one of the PUCCH, the PUSCH, and the SRS to the BS 200. The BS 200 receives at least one of the PUCCH, the PUSCH, and the SRS from the UE 100. It is noted that the UE 100 and the BS 200 may perform communication using the active downlink BWP in addition to the active uplink BWP using the measurement result based on the CSI-RS.

As described above, even when the SSB is not transmitted in the active BWP, the UE 100 (the controller 120) can appropriately perform the communication control by using the measurement result of the CSI-RS transmitted in the downlink BWP in the active uplink BWP to be actually used.


(Other Embodiments)


Although the embodiments of the present disclosure have been described above, the present disclosure is not limited to the embodiments. For example, a description has been given as to a case of calculating the uplink transmission power as an example of controlling the communication with the BS 200 using the stored measurement result, but the present disclosure is not limited thereto. The UE 100 may use, for example, the measurement result stored in the measurement report for controlling the handover as the communication control with the BS 200. The UE 100 may use a measurement result stored in, for example, the measurement report for controlling the handover and adaptive modulation and coding (AMC) as the communication control with the BS 200. Alternatively, the UE 100 may use the stored measurement result when performing a specific communication control among the communication controls with the BS 200. For example, the UE 100 may use the stored measurement result when calculating the uplink transmission power.

In addition, in each operation example described above, the RRC signaling is applied as an example of the control of the BWP switching in which the UE 100 switches the active BWPs, but the configuration is not limited thereto. APDCCH, a timer (that is, bwp-InactivityTimer), or a MAC entity may be applied to control the BWP switching. Therefore, the BS 200 may transmit the control information for switching the active BWPs to the UE 100 using, for example, the PDCCH.

Each operation example described above is not limited to the case of being separately and independently performed, and each operation example can be appropriately combined and performed. Furthermore, for example, the steps in the processing described in the present specification do not necessarily need to be executed in time series in the order described in the flowchart or the sequence diagram. For example, the steps in the processing may be executed in an order different from the order described as the flowchart or the sequence diagram, or may be executed in parallel. Furthermore, some of the steps in the processing may be deleted, and further steps may be added to the processing. Moreover, each operation flow described above is not limited to be separately and independently implemented, and can be implemented by combining two or more operation flows. For example, some steps of one operation flow may be added to another operation flow, or some steps of one operation flow may be replaced with some steps of another operation flow.

For example, a method may be provided that includes operation of one or more components of the apparatus described herein, and a program may be provided to cause a computer to perform the operation of the components. Furthermore, a non-transitory tangible computer-readable storage medium on which the program is recorded may be provided. Such methods, programs, and a non-transitory tangible computer-readable storage medium (non-transitory tangible computer-readable storage medium) are also included in the present disclosure. Furthermore, at least a part of the UE 100 or at least a part of the BS 200 may be a chip set or a SoC (System on Chip) in which circuits that execute respective processing performed by the UE 100 or the BS 200 are integrated.

In the present disclosure, "transmit" may mean to perform processing of at least one layer in a protocol stack used for transmission, or may mean to physically transmit a signal wirelessly or by wire. Alternatively, "transmit" may mean a combination of performing the processing of at least one layer and physically transmitting a signal wirelessly or by wire. Similarly, "receive" may mean to perform processing of at least one layer in the protocol stack used for reception, or may mean to physically receive signals wirelessly or by wire. Alternatively, "receive" may mean a combination of performing the processing of at least one layer and physically receiving a signal wirelessly or by wire.

Although the present disclosure has been described in accordance with examples, it is understood that the present disclosure is not limited to the examples and structures. The present disclosure also includes various modifications and modifications within an equivalent range. In addition, various combinations and modes, and other combinations and modes including only one element, more elements, or less elements are also within the scope and idea of the present disclosure.

## Claims

1. A user equipment (100) configured to perform communication with a base station (200) in a BWP that is a subset of a total bandwidth of a cell of the base station (200), the user equipment comprising:

   a communicator (110) configured to perform the communication using an active BWP to be used for the communication with the base station (200) among a plurality of the BWPs configured in the user equipment (100); and
   a controller (120) configured to store a measurement result obtained by performing measurement on an SSB when a BWP with the SSB, which is a BWP in which the SSB is transmitted from the base station (200) among the plurality of BWPs, is the active BWP, wherein
   the controller (120) is configured to control the communication using the stored measurement result when a BWP without the SSB, which is a BWP in which the SSB is not transmitted from the base station (200) among the plurality of BWPs, is the active BWP.

2. The user equipment according to claim 1, wherein the controller (120) is configured to

   perform the measurement on the SSB in the BWP with the SSB in response to switching of the active BWP from the BWP without the SSB to the BWP with the SSB, and
   update the stored measurement result with a result of the measurement.

3. The user equipment according to claim 1 or 2, wherein

   the active BWP includes an active downlink BWP to be used for downlink communication with the base station (200) and an active uplink BWP to be used for uplink communication with the base station (200), and
   the controller (120) is configured to control, when the BWP without the SSB is the active BWP, uplink transmission power in the active uplink BWP by using the stored measurement result.

4. The user equipment according to claim 3, wherein
   the measurement result includes at least one of received power of the SSB and a path loss estimation value calculated from the received power.

5. The user equipment according to any one of claims 1 to 4, wherein
the controller (120) is configured to use, when a plurality of the BWPs with the SSB are present in the plurality of BWPs, the latest measurement result obtained in the BWP with the SSB having a frequency closest to a frequency of the active BWP among the measurement results of the plurality of BWPs with the SSB.

6. The user equipment according to any one of claims 1 to 5, wherein
the controller (120) is configured to control, when measurement of a channel state information reference signal (CSI-RS) for the user equipment (100) is configured in the BWP without the SSB, the communication using a measurement result of the CSI-RS without using the stored measurement result.

7. A communication control method executed by user equipment (100) configured to perform communication with a base station (200) in a BWP that is a subset of a total bandwidth of a cell of the base station (200), the communication control method comprising the steps of:

performing the communication using an active BWP to be used for the communication with the base station (200) among a plurality of the BWPs configured in the user equipment (100);
storing a measurement result obtained by performing measurement on an SSB when a BWP with the SSB, which is a BWP in which the SSB is transmitted from the base station (200) among the plurality of BWPs, is the active BWP; and
controlling the communication using the stored measurement result when a BWP without the SSB, which is a BWP in which the SSB is not transmitted from the base station (200) among the plurality of BWPs, is the active BWP.

# FIG. 1

## FIG. 2

100

UE

110                                     120

COMMUNICATOR           CONTROLLER

FIG. 3

# FIG. 4

UE 100                                                          BS 200

S101
← CONFIGURATION INFORMATION

| APPLY CONFIGURATION BASED ON CONFIGURATION INFORMATION | S102 |

| DETERMINE WHETHER SSB IS TRANSMITTED IN ACTIVE DOWNLINK BWP | S103 |

S104
← SSB

| PERFORM MEASUREMENT USING SSB IN ACTIVE DOWNLINK BWP | S105 |

| STORE MEASUREMENT RESULT BASED ON SSB IN ACTIVE DOWNLINK BWP | S106 |

S107
CONTROL COMMUNICATION USING STORED MEASUREMENT RESULT

S108
← CONFIGURATION INFORMATION

| APPLY CONFIGURATION BASED ON CONFIGURATION INFORMATION | S109 |

| DETERMINE WHETHER SSB IS TRANSMITTED IN ACTIVE DOWNLINK BWP | S110 |

S111
CONTROL COMMUNICATION USING STORED MEASUREMENT RESULT

# FIG. 5

UE 100                                          BS 200

CONFIGURATION INFORMATION — S112

| APPLY CONFIGURATION BASED ON CONFIGURATION INFORMATION | S113 |

| DETERMINE WHETHER SSB IS TRANSMITTED IN ACTIVE DOWNLINK BWP | S114 |

SSB — S115

| PERFORM MEASUREMENT USING SSB IN ACTIVE DOWNLINK BWP | S116 |

| STORE MEASUREMENT RESULT BASED ON SSB IN ACTIVE DOWNLINK BWP | S117 |

CONTROL COMMUNICATION USING STORED MEASUREMENT RESULT — S118

CONFIGURATION INFORMATION — S119

| APPLY CONFIGURATION BASED ON CONFIGURATION INFORMATION | S120 |

| DETERMINE WHETHER SSB IS TRANSMITTED IN ACTIVE DOWNLINK BWP | S121 |

CONTROL COMMUNICATION USING STORED MEASUREMENT RESULT — S122

# FIG. 6

UE 100         BS 200

S201
← CONFIGURATION INFORMATION

S202
APPLY CONFIGURATION BASED ON
CONFIGURATION INFORMATION

S203
DETERMINE WHETHER
SSB IS TRANSMITTED
IN ACTIVE DOWNLINK BWP

S204
← SSB

S205
PERFORM MEASUREMENT
USING SSB
IN ACTIVE DOWNLINK BWP

S206
STORE MEASUREMENT RESULT
BASED ON SSB
IN ACTIVE DOWNLINK BWP

S207
CONTROL COMMUNICATION
USING MEASUREMENT RESULT
BASED ON SSB

S208
← CONFIGURATION INFORMATION

S209
APPLY CONFIGURATION BASED ON
CONFIGURATION INFORMATION

S210
DETERMINE WHETHER
SSB IS TRANSMITTED
IN ACTIVE DOWNLINK BWP

S211
← CSI-RS

S212
PERFORM MEASUREMENT
USING CSI-RS
IN ACTIVE DOWNLINK BWP

S213
STORE MEASUREMENT RESULT
BASED ON CSI-RS
IN ACTIVE DOWNLINK BWP

S214
CONTROL COMMUNICATION
USING MEASUREMENT RESULT
BASED ON CSI-RS

## INTERNATIONAL SEARCH REPORT

| International application No. |
| --- |
| **PCT/JP2022/012594** |

| **A. CLASSIFICATION OF SUBJECT MATTER** |
| --- |
| ***H04W 56/00***(2009.01)i; ***H04W 52/24***(2009.01)i<br>FI: H04W56/00 130; H04W52/24 |
| According to International Patent Classification (IPC) or to both national classification and IPC |

| **B. FIELDS SEARCHED** |
| --- |
| Minimum documentation searched (classification system followed by classification symbols)<br>H04W56/00; H04W52/24 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020/060952 A1 (INTEL CORPORATION) 26 March 2020 (2020-03-26)<br>page 25, line 14 to page 26, line 16 | 1-7 |
| A | WO 2019/224871 A1 (NTT DOCOMO, INCORPORATED) 28 November 2019 (2019-11-28)<br>paragraph [0064] | 1-7 |
| A | WO 2019/193735 A1 (NTT DOCOMO, INCORPORATED) 10 October 2019 (2019-10-10)<br>paragraph [0048] | 1-7 |
| A | WO 2019/092943 A1 (NEC CORPORATION) 16 May 2019 (2019-05-16)<br>paragraphs [0082]-[0085] | 1-7 |
| A | WO 2019/092942 A1 (NEC CORPORATION) 16 May 2019 (2019-05-16)<br>paragraph [0055] | 1-7 |
| A | NOKIA. NOKIA SHANGHAI BELL. Mobility measurements outside active BWP[online].<br>3GPP TSG RAN WG2 #101bis R2-1805705, 20 April 2018<br>section 2 | 1-7 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 June 2022** | **21 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/012594**

| Patent document cited in search report | | | Publication date (day/month/year) | Patent family member(s) | | | Publication date (day/month/year) |
|---|---|---|---|---|---|---|---|
| WO | 2020/060952 | A1 | 26 March 2020 | CN | 112840696 | A | |
| WO | 2019/224871 | A1 | 28 November 2019 | US | 2021/0204231 | A1 | |
| | | | | paragraph [0080] | | | |
| | | | | CN | 112425230 | A | |
| WO | 2019/193735 | A1 | 10 October 2019 | US | 2021/0076343 | A1 | |
| | | | | paragraph [0064] | | | |
| | | | | CN | 112262612 | A | |
| WO | 2019/092943 | A1 | 16 May 2019 | US | 2019/0182000 | A1 | |
| | | | | paragraphs [0123]-[0126] | | | |
| | | | | KR | 10-2020-0060501 | A | |
| | | | | CN | 111357357 | A | |
| WO | 2019/092942 | A1 | 16 May 2019 | US | 2020/0274679 | A1 | |
| | | | | paragraph [0080] | | | |
| | | | | KR | 10-2020-0083592 | A | |
| | | | | CN | 111602442 | A | |

Form PCT/ISA/210 (patent family annex) (January 2015)

**EP 4 319 335 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021060869 A